# EUROPEAN PATENT SPECIFICATION

(11) **EP 3 650 602 B1**
(45) Date of publication and mention of the grant of the patent: **05.06.2024**
(21) Application number: 18827620.8
(22) Date of filing: 05.07.2018
(51) Int. Cl.: E01C 19/48, B60Q 1/24, F21S 41/657, F21V 19/02, F21V 23/00, F21V 23/04

(54) **ASPHALT PAVER**
ASPHALTFERTIGER
FINISSEUSE D'ASPHALTE

(30) Priority: 05.07.2017 JP 2017132032
(43) Date of publication of application: 13.05.2020
(73) Proprietor: Sumitomo (S.H.I.) Construction Machinery Co., Ltd., Shinagawa-ku Tokyo 141-6025 (JP)
(72) Inventor: BABA, Nobuyuki, Chiba-shi, Chiba 263-0001 (JP)
(74) Representative: Louis Pöhlau Lohrentz
(86) International application number: PCT/JP2018/025459
(87) International publication number: WO 2019/009349

(56) References cited:
- JP-A- H0 826 024
- JP-A- 2010 112 100
- JP-A- 2011 196 176
- JP-A- 2013 079 571
- JP-A- 2016 218 813
- JP-A- 2017 036 988
- JP-U- H0 668 981

## Description

### [Technical Field]

The disclosures herein relate to an asphalt finisher.

### [Background Art]

An asphalt finisher, as known in the art, may include a lighting apparatus for use in nighttime operations, a generator for generating power for supply to the lighting apparatus, and a hydraulic motor for driving the generator (see Patent Document 1).

The lighting apparatus is typically mounted at a predetermined location on the asphalt finisher with a fixed mounting angle.
Patent Document 2 discloses a construction machine with an external control stand having an illumination device.
Patent Document 3 discloses a road finisher.
Patent Document 4 discloses a monitoring device for a working machine with obstacle detecting means.
Patent Document 5 discloses a photographing system with a flying body.
Patent Document 6 discloses an inspection system of a sewer line facility.
Patent Document 7 discloses a vehicle with working lamps.
Patent Document 8 discloses a shovel.

### [Related-Art Documents]

### [Patent Document]

[Patent Document 1] Japanese Patent Application Publication No. H03-125806
[Patent Document 2] Japanese Publication No. JP2013079571A
[Patent Document 3] Japanese Publication No. JP2011196176A
[Patent Document 4] Japanese Publication No. JP2010112100A
[Patent Document 5] Japanese Publication No. JP2017036988A
[Patent Document 6] Japanese Publication No. JP2016218813A
[Patent Document 7] Japanese Publication No. JPH082 6024A
[Patent Document 8] Japanese Publication No. JPH0668981U

### [Summary of the Invention]

### [Problem to be Solved by the Invention]

As a downside of being secured to the asphalt finisher, the lighting apparatus is moved away from workers working behind the asphalt finisher as the asphalt finisher moves away. Areas around the workers may thus be not properly illuminated.

In consideration of the above, it may be desired to provide an asphalt finisher that more properly illuminates areas around workers.

### [Means to Solve the Problem]

An asphalt finisher according to an embodiment of the present invention includes a tractor, a hopper disposed in front of the tractor and configured to accept a pavement material, a conveyor configured to supply the pavement material in the hopper to a rear side of the tractor, a screw configured to lay and spread the pavement material supplied by the conveyor at the rear side of the tractor, a screed configured to flatten the pavement material laid and spread by the screw at a rear side of the screw, and a controller configured to adjust an illumination range of a lighting apparatus that illuminates areas behind the asphalt finisher, and an object detecting apparatus configured to detect a worker behind the screed, wherein the controller is configured to adjust the illumination range of the lighting apparatus based on a detection result of the object detecting apparatus such that an area around the detected worker is illuminated.

### [Advantage of the Invention]

With the above-noted arrangement, an asphalt finisher that more properly illuminates areas around workers is provided.

### [Brief Description of Drawings]

Fig. 1 is a side-elevation view of an asphalt finisher according to an embodiment of the present invention.
Fig. 2 is a top view of the asphalt finisher of Fig. 1.
Fig. 3 is a block diagram illustrating an example of the configuration of a lighting system.
Fig. 4 is a flowchart of a lighting control process.
Fig. 5 is a drawing illustrating another example of the lighting system.
Fig. 6 is a side-elevation view of the asphalt finisher equipped with the lighting system of Fig. 5.
Fig. 7 is a top view of the asphalt finisher of Fig. 6.

### [Mode for Carrying Out the Invention]

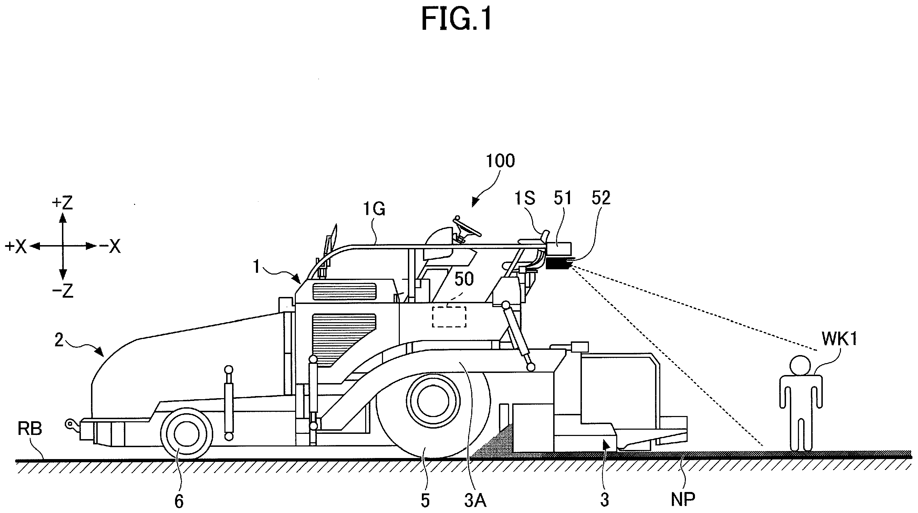

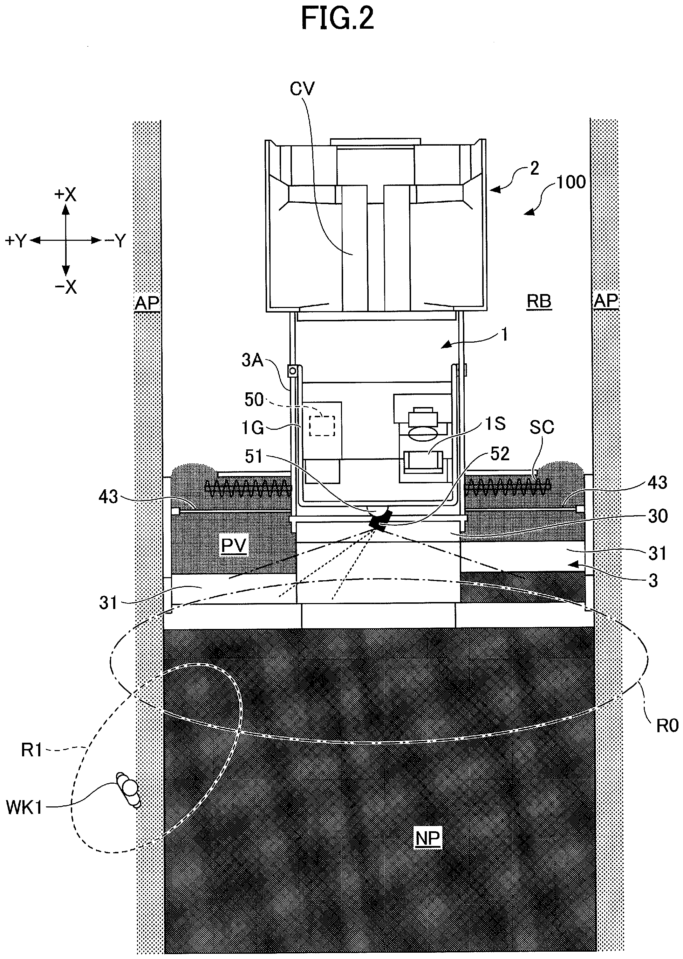

Fig. 1 is a side-elevation view of an asphalt finisher 100 which is an example of road machinery according to an embodiment of the present invention. The road machinery may be a base paver, a tack coat paver, a multi-asphalt paver, or the like. Fig. 2 is a top view of the asphalt finisher 100. The asphalt finisher 100 is mainly comprised of a tractor 1, a hopper 2, and a screed 3. In the following, the direction of the hopper 2 as viewed from the tractor 1 (the +X direction) is referred to as a front direction, and the direction of the screed 3 as viewed from the tractor 1 (the -X direction) is referred to as a rear direction.

The tractor 1 is a mechanism configured to drive the asphalt finisher 100. In the present embodiment, the tractor 1 uses a rear-wheel hydraulic motor to rotate rear wheels 5, and uses a front-wheel hydraulic motor to rotate front wheels 6, thereby causing the asphalt finisher 100 to move. The rear-wheel hydraulic motor and the front-wheel hydraulic motor rotates upon receiving hydraulic oil from hydraulic pumps. The rear wheels 5 and the front wheels 6 may be replaced with crawlers.

A controller 50 is a controller configured to control the asphalt finisher 100. In the present embodiment, the controller 50, which is comprised of a microcomputer including a CPU, a memory, a non-volatile storage device, and the like, is mounted on the tractor 1. Various functions of the controller 50 are provided by the CPU executing programs stored in a non-volatile storage medium.

The hopper 2 is a mechanism for accepting pavement material. In the present embodiment, the hopper 2 is installed in front of the tractor 1, and is configured to be opened and closed in the Y axis direction (i.e., width direction) by hopper cylinders. The hopper 2 of the asphalt finisher 100 is typically fully opened to accept pavement material (e.g., an asphalt mix) from the bed of a dump truck. Fig. 1 and Fig. 2 illustrates the fully opened state of the hopper 2. When the paving material in the hopper 2 decreases, the hopper 2 is closed, so that the paving material disposed near the inner wall of the hopper 2 is collected toward the center of the hopper 2. Due to this operation, a conveyor CV situated at the center of the hopper 2 can supply the pavement material to the rear side of the tractor 1. The pavement material supplied to the rear side of the tractor 1 is laid and spread by a screw SC in the vehicle width direction in rear of the tractor 1 and in front of the screed 3. In the present embodiment, the screw SC has extension screws attached to the left and right thereof. In Fig. 1 and Fig. 2, a pavement material PV laid and spread by the screw SC is shown as a dot pattern.

The screed 3 is a mechanism for flatten the pavement material PV. In the present embodiment, the screed 3 includes a front screed 30 and a rear screed 31. The screed 3, which is a free floating screed towed by the tractor 1, is coupled to the tractor 1 via a leveling arm 3A.

A moldboard 43 is attached to the front of the screed 3. The moldboard 43 regulates the amount of pavement material PV that stays in front of the screed 3. The pavement material PV passes through the gap between the lower end of the moldboard 43 and a roadbed RB to reach under the screed 3.

A guide rail 1G is provided at the top of the tractor 1 for use as a handrail by an operator of the asphalt finisher 100. An object detecting apparatus 51 and a lighting apparatus 52 are mounted on the guide rail 1G. The object detecting apparatus 51 and the lighting apparatus 52 may alternatively be mounted on the bottom of the operator seat 1S or at some other location on the tractor 1.

The object detecting apparatus 51 is configured to detect an object present around the asphalt finisher 100. In the present embodiment, the object detecting apparatus 51, which is a camera capable of capturing a rear view image behind the asphalt finisher 100, is wirelessly connected or wire-connected to the controller 50. The controller 50 may perform various image processing on images captured by the object detecting apparatus 51, for example, thereby detecting the positions of workers behind the asphalt finisher 100. The workers preferably wear an armband, a helmet, or the like on which a predetermined marker is provided. This is for the purpose of making a recognition task easier for image recognition process. In this case, the controller 50 may search for the image of the predetermined marker to detect the positions of workers. The controller 50 may detect a worker making a predetermined gesture to detect the position of the worker or the position to which light should be directed.

The object detecting apparatus 51 may alternatively be a stereo camera, a millimeter-wave radar, an ultrasonic sensor, a laser radar, an infrared sensor, a lider, or the like. The object detecting apparatus 51 may additionally be configured to detect an object situated in front of or to either side of the asphalt finisher 100. In the present embodiment, one object detecting apparatus 51 is mounted on the asphalt finisher 100. Alternatively, a plurality of object detecting apparatuses 51 may be mounted on the asphalt finisher 100.

The lighting apparatus 52 is configured to illuminate areas around the asphalt finisher 100. In the present embodiment, the lighting apparatus 52 is positioned such as to illuminate areas behind the asphalt finisher 100, and is wirelessly connected or wire-connected to the controller 50. The lighting apparatus 52 may be mounted such as to additionally illuminate areas in front of or to either side of the asphalt finisher 100. In the present embodiment, one lighting apparatus 52 is mounted on the asphalt finisher 100. Alternatively, a plurality of lighting apparatuses 52 may be mounted on the asphalt finisher 100.

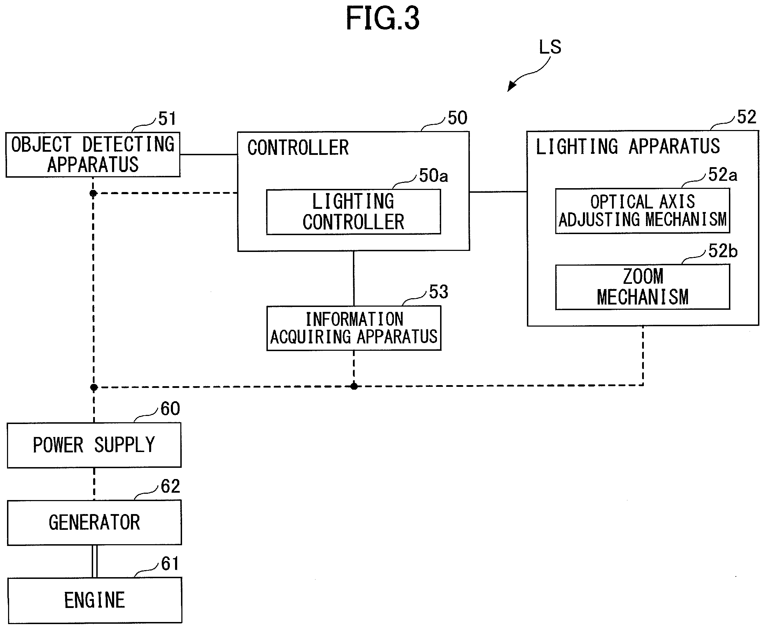

In the following, a lighting system LS installed on the asphalt finisher 100 will be described with reference to Fig. 3. Fig. 3 is a block diagram illustrating an example of the configuration of the lighting system LS. The lighting system LS is mainly comprised of the controller 50, the object detecting apparatus 51, the lighting apparatus 52, an information acquiring apparatus 53, and the like. In the present embodiment, the controller 50, the object detecting apparatus 51, the lighting apparatus 52, and the information acquiring apparatus 53 receive power from a power supply 60. The power supply 60 converts AC power, generated by a generator 62 driven by an engine 61, into DC power. Thick dashed lines in Fig. 3 represent power lines, and the double line represents a mechanical connection between the engine 61 and the generator 62.

The controller 50 includes a lighting controller 50a as a functional element. The lighting controller 50a, which is implemented as software, hardware, or firmware, controls the lighting apparatus 52. In the present embodiment, the lighting controller 50a determines whether lighting is needed based on the output of the object detecting apparatus 51, the information acquiring apparatus 53, and the like. Upon determining that lighting is needed, the lighting controller 50a determines a target illumination area, and supplies a instruction regarding the target illumination area to the lighting apparatus 52. The target illumination area refers to the area that needs to be illuminated by the lighting apparatus 52.

The lighting apparatus 52 includes an optical axis adjusting mechanism 52a and a zoom mechanism 52b. The lighting apparatus 52 drives at least one of the optical axis adjusting mechanism 52a and the zoom mechanism 52b in response to the instruction from the controller 50 to change an illumination range. This is for the purpose of illuminating the target illumination area. The lighting apparatus 52 may be configured to change at least one of light intensity (i.e., brightness), wavelengths (i.e., color), and the like.

The optical axis adjusting mechanism 52a changes the direction of the optical axis of the lighting apparatus 52. In the present embodiment, an electric motor and a gear mechanism are used to mechanically change the orientation of the optical axis of the lighting apparatus 52 in vertical directions and horizontal directions. Namely, the positioning of the light source of the lighting apparatus 52 is changed to modify the direction of the optical axis of the lighting apparatus 52. Alternatively, the optical axis adjusting mechanism 52a may change the optical axis of the lighting apparatus 52 by optical means. Namely, the positioning of a mirror or the like may be changed to modify the direction of the optical axis of the lighting apparatus 52.

The zoom mechanism 52b changes an illumination range provided by the lighting apparatus 52. In the present embodiment, an electric motor and a gear mechanism are used to change the positioning of an optical device in the lighting apparatus 52 to increase or decrease the illumination range provided by the lighting apparatus 52.

The information acquiring apparatus 53 acquires information, and outputs the acquired information to the controller 50. The information acquiring apparatus 53 includes at least one of a travel speed sensor, a steering angle sensor, a pavement width sensor, a brightness sensor (including a camera), and a light switch, for example. The travel speed sensor detects the travel speed of the asphalt finisher 100. The steering angle sensor detects the steering angle of the asphalt finisher 100. The pavement width sensor calculates a pavement width by detecting the extension of the rear screed 31. The brightness sensor detects the brightness of areas around the asphalt finisher 100. The brightness sensor may be a luminance sensor embedded in the camera of the object detecting apparatus 51. This is because the luminance sensor embedded in the camera of the object detecting apparatus 51 is configured to detect the luminance of an area at least within the view of the camera. The light switch may be used by an operator to turn on and off the lighting apparatus 52.

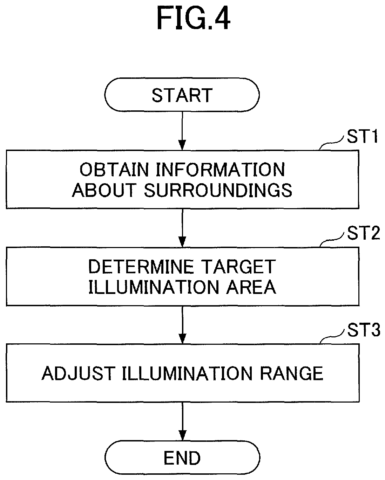

In the following, an example of the operation of the lighting controller 50a to control the lighting apparatus 52 (which will hereinafter be referred to as a "lighting control process") will be described with reference to Fig. 4. Fig. 4 is a flowchart illustrating an example of the lighting control process. In the example illustrated in Fig. 4, the lighting controller 50a performs the lighting control process at predetermined control intervals during the operation of the lighting apparatus 52. The lighting controller 50a starts performing the lighting control process at the time the lighting apparatus 52 is activated by operating the light switch, for example. Alternatively, the lighting control process may be started at the time the lighting apparatus 52 automatically starts illuminating in response to the output of the brightness sensor. At the start of the lighting control process, the lighting apparatus 52 illuminates a standard illumination area RO indicated by the dot-and-dash line in Fig. 2, for example.

At the beginning, the lighting controller 50a obtains status information about areas around the asphalt finisher 100 (step ST1). According to the invention, the lighting controller 50a determines, based on the output of the object detecting apparatus 51, whether there is a worker in a predetermined area behind the asphalt finisher 100. Upon detecting a worker in the predetermined area, the position of the worker is then identified.

Thereafter, the lighting controller 50a determines a target illumination area (step ST2). According to the invention, upon determining the presence of a worker WK1 behind the asphalt finisher 100 as shown in Fig. 2, the lighting controller 50a sets an area of a predetermined size including the position of the worker WK1 as a target illumination area. Namely, an area R1 indicated by the dashed line is set as the target illumination area. In the example illustrated in Fig. 2, the worker WK1 is engaged in the task of laying and spreading, with a rake, the joint portion of a new pavement NP adjacent to an existing pavement AP .

Subsequently, the lighting controller 50a adjusts the illumination range of the lighting apparatus 52 so that the target illumination area is illuminated (Step ST3). Namely, the illumination range of the lighting apparatus 52 is adjustable based on the detection result of the object detecting apparatus 51. In the present embodiment, the lighting controller 50a outputs an instruction regarding the target illumination area to the lighting apparatus 52. The instruction regarding the target illumination area includes information about the direction of the optical axis of the lighting apparatus 52 and information about the size of an illumination range. Upon receiving the instruction regarding the target illumination area, the lighting apparatus 52 activates at least one of the optical axis adjusting mechanism 52a and the zoom mechanism 52b to adjust the illumination range such that the illumination range coincides with the target illumination area or such that the illumination range includes the target illumination area.

In this manner, the controller 50 may change the illumination range of the lighting apparatus 52 in response to a change in the relative position of the worker WK1 with respect to the asphalt finisher 100. Namely, the lighting apparatus 52 can continuously illuminate the worker WK1 by tracking the worker WK1.

The lighting controller 50a may obtain status information about the movement of the asphalt finisher 100 to determine a target illumination area. Namely, the illumination range of the lighting apparatus 52 may be adjusted in response to the state of movement. For example, the target illumination area may be determined based on the output of the pavement width sensor. In this case, the illumination range of the lighting apparatus 52 is expanded in the vehicle width direction in proportion to the pavement width, for example. Alternatively, the target illumination area may be determined based on the output of the travel speed sensor. In this case, the illumination range of the lighting apparatus 52 is expanded in the vehicle length direction in proportion to the travel speed, for example.

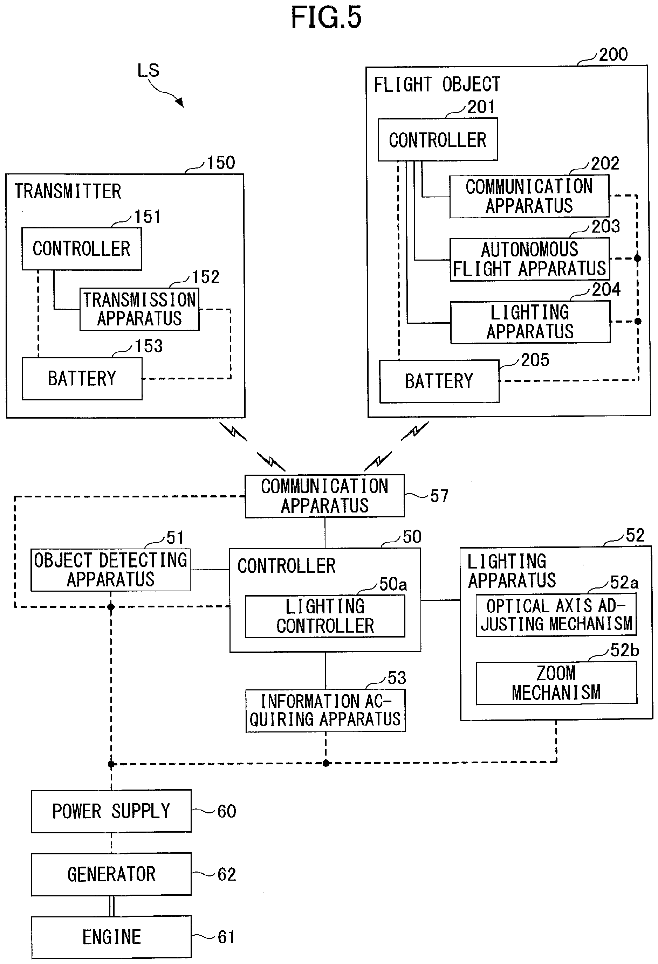

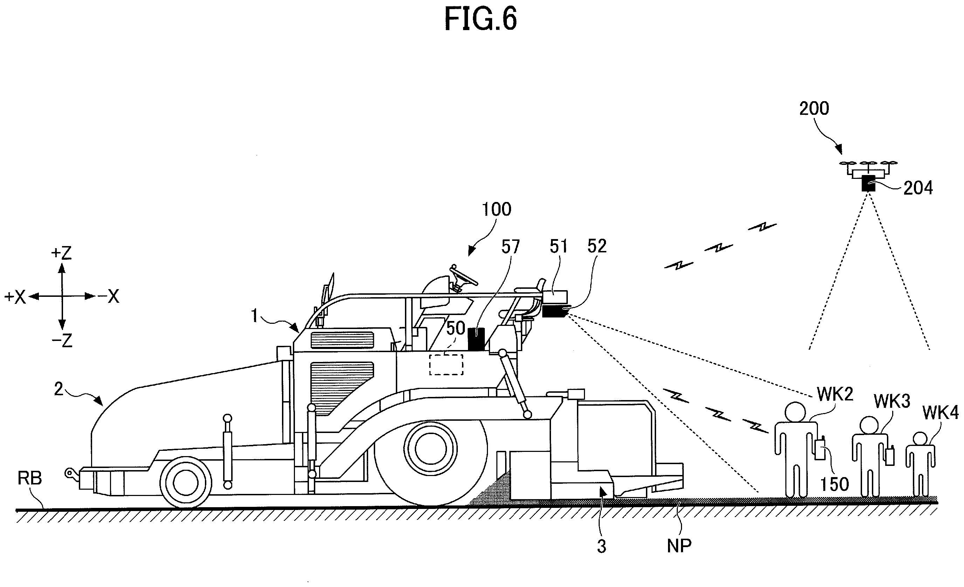

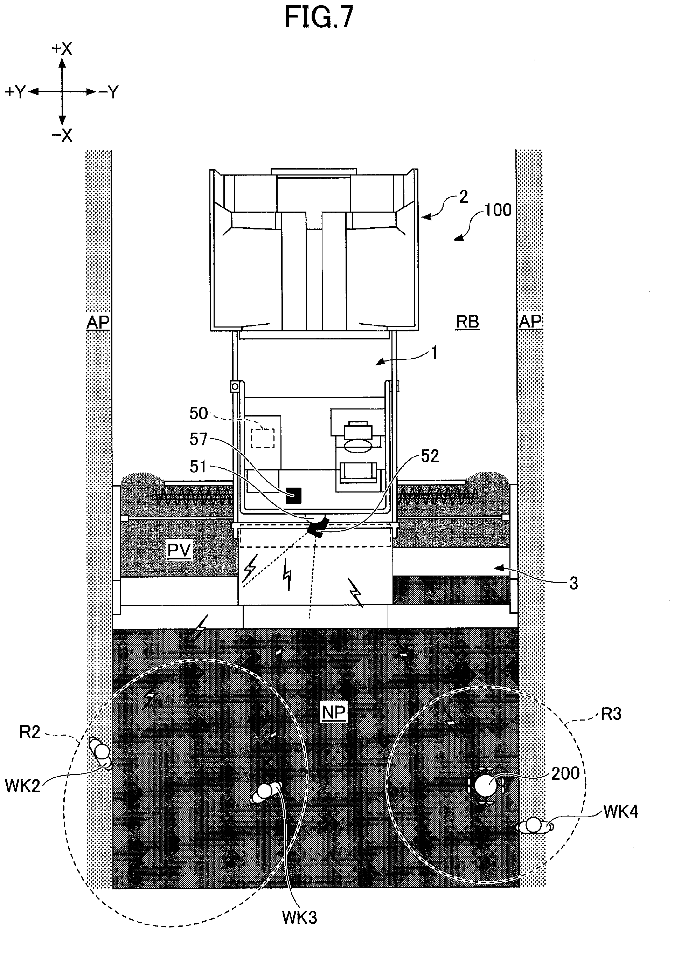

In the following, another example of the configuration of the lighting system LS will be described with reference to Fig. 5 through Fig. 7. Fig. 5 is a block diagram illustrating another example of the configuration of the lighting system LS. Fig. 6 is a side-elevation view of the asphalt finisher 100 equipped with the lighting system LS of Fig. 5. Fig. 7 is a top view of the asphalt finisher 100 equipped with the lighting system LS of Fig. 5.

The lighting system LS of Fig. 5 differs from the lighting system LS of Fig. 3 in that a communication apparatus 57 is provided to control communication with at least one of a transmitter 150 and a flight object 200. Other than this, anything else is the same. In consideration of this, differences will be described in detail while avoiding the description of the same parts.

The transmitter 150, which is a device carried by a worker, may be a mobile phone, a smartphone, a wearable PC, a general-purpose remote controller, and the like. In the present embodiment, a wristwatch-type transmitter is used.

Specifically, the transmitter 150 is comprised of a controller 151, a transmission apparatus 152, a battery 153, and the like. The controller 151 and the transmission apparatus 152 receive power from the battery 153.

The controller 151 is a device for controlling the transmitter 150. In the present embodiment, the controller 151 is comprised of a microcomputer. The controller 151 executes programs corresponding to respective functions to provide the functions corresponding to these programs.

The transmission apparatus 152 transmits information to outside the transmitter 150. The transmission apparatus 152 repeatedly transmits information receivable by the asphalt finisher 100 at a predetermined transmission interval, for example. The transmission apparatus 152 may alternatively transmit information in response to a predetermined manual operation performed by a worker such as the pressing of a transmission button. Alternatively, the transmission apparatus 152 may transmit information when a predetermined transmission condition is satisfied such as the arrival of a predetermined hour.

The flight object 200, which is an autonomous flight object capable of flying under remote control or autonomous control, and may be a multicopter, an airship, or the like. In the present embodiment, a quadcopter equipped with a lighting apparatus 204 is used.

Specifically, the flight object 200 is comprised of a controller 201, a communication apparatus 202, an autonomous flight apparatus 203, a lighting apparatus 204, a battery 205, and the like. The controller 201, the communication apparatus 202, the autonomous flight apparatus 203, and the lighting apparatus 204 receive power from the battery 205. It may be noted that the controller 201, the communication apparatus 202, the autonomous flight apparatus 203, and the lighting apparatus 204 may alternatively receive power from the power supply 60 mounted on the asphalt finisher 100. In this case, the flight object 200 is connected to the power supply 60 through a power supply cable.

The controller 201 is a device for controlling the flight object 200. In the present embodiment, the controller 201 is comprised of a microcomputer. The controller 201 executes programs corresponding to respective functions to provide the functions corresponding to these programs.

The communication apparatus 202 receives information from the outside of the flight object 200 The communication apparatus 202 receives information transmitted by the asphalt finisher 100, for example. The communication apparatus 202 may transmit information to the outside of the flight object 200. In this case, the communication apparatus 202 may transmit information receivable by the asphalt finisher 100, for example.

The autonomous flight apparatus 203 is a device for achieving autonomous flight of the flight object 200. In the present embodiment, the autonomous flight apparatus 203 includes a flight controller and a electric motor. The flight controller includes at least one of various sensors such as a gyro sensor, an acceleration sensor, a geomagnetic sensor (i.e., orientation sensor), a barometric sensor, a positioning sensor, and an ultrasonic sensor, and provides an attitude maintaining function, an altitude maintaining function, and the like. The electric motor receives power from the battery 205 to rotate the propellers. Upon receiving information about a flight path from the controller 201, for example, the autonomous flight apparatus 203 controls the rotational speeds of four propellers separately, thereby causing the flight object 200 to move along the flight path while maintaining the attitude and altitude of the flight object 200. The information about a flight path is comprised of the latitude, longitude, and altitude of the flight position, for example. The controller 201 acquires information about a flight path from the asphalt finisher 100 through the communication apparatus 202, for example. The controller 201 may determine a flight path by taking into account the positions of obstacles that may obstruct the flight of the flight object 200. Obstacles that may obstruct flight may be detected based on images captured by a camera, for example. The camera may be the camera mounted on the asphalt finisher 100, or may be a camera mounted on the flight object 200. The flight object 200 may autonomously avoid obstacles that may obstruct the flight, based on at least one output of a camera, a sensor, and the like mounted on the flight object 200.

The lighting apparatus 204 illuminates areas under the flight object 200. In the present embodiment, the lighting apparatus 204 is mounted such as to illuminate areas under the flight object 200, and is coupled to the controller 201. In the present embodiment, one lighting apparatus 204 is mounted on the flight object 200. Alternatively, a plurality of lighting apparatuses 204 may be mounted on the flight object 200.

The lighting apparatus 204 may include an optical axis adjusting mechanism and a zoom mechanism, similarly to the lighting apparatus 52. In this case, the lighting apparatus 204 causes at least one of the optical axis adjusting mechanism and the zoom mechanism to adjust an illumination range in response to an instruction from the controller 201. The lighting apparatus 204 may be configured to change at least one of light intensity (i.e., brightness), wavelengths (i.e., color), and the like.

The flight object 200 may be provided with a camera. In this case, the flight object 200 may recognize the asphalt finisher 100 and workers based on images captured by the camera. Alternatively, the flight object 200 may receive information indicative of positions of the asphalt finisher 100 and workers. With these arrangement, the flight object 200 may fly while being in the possession of information about the relative positions of the asphalt finisher 100 and the workers.

The communication apparatus 57 is a device mounted on the asphalt finisher 100 and coupled to the controller 50. Communication between the controller 50 and external equipment can thus be controlled. In the present embodiment, the communication apparatus 57 functions as a receiver apparatus to receive signals transmitted by the transmitter 150. In this case, communication standards such as Bluetooth (registered trademark) or Wi-Fi (registered trademark) may be utilized. The controller 50 may obtain information about the position of the transmitter 150, i.e., the position of a worker, based on the output of the transmitter 150 (e.g., radio wave intensity). The controller 50 also serves as a transmitter apparatus to transmit information about the illumination range of the lighting apparatus 204 such as a target illumination area to the flight object 200.

With this arrangement, the lighting controller 50a determines, based on the output of the transmitter 150 serving as the object detecting apparatus 51, whether there is a worker in a predetermined area behind the asphalt finisher 100. Upon determining the presence of a worker in the predetermined area, the lighting controller 50a obtains information about the positon of the worker, followed by determining a target illumination area based on this position.

For example, upon determining the presence of workers WK2 through WK4 behind the asphalt finisher 100 as shown in Fig. 6 and Fig. 7, the lighting controller 50a sets one or more areas of a predetermined size including the positions of the workers WK2 through WK4 as one or more target illumination areas. In this example, the lighting controller 50a is able to utilize the lighting apparatus 52 and the lighting apparatus 204, and thus sets two target illumination areas. Namely, an area R2 indicated by a dashed line is set as a first target illumination area with respect to the lighting apparatus 52, and an area R3 indicated by a dashed line is set as a second target illumination area with respect to the lighting apparatus 204. In this example, the worker WK2 is engaged in the task of laying and spreading, with a rake, the joint portion of a new pavement NP adjacent to an existing pavement AP . The worker WK3 is engaged in the task of measuring the thickness of the new pavement NP by using a thickness gage. The worker WK4 is engaged in the task of providing compaction for the joint portion of the new pavement NP adjacent to the existing pavement AP by use of a compactor. The first target illumination area includes the positions of the worker WK2 and the worker WK3. The second target illumination area includes the position of the worker WK4. Alternatively, the lighting controller 50a may set two target illumination areas such that the first target illumination area includes the position of the worker WK2 and the second target illumination area includes the positions of the worker WK3 and the worker WK4. The transmitter 150 may alternatively be attached to at least one of the work tools such as a rake, a thickness gage, and a compactor.

Subsequently, the lighting controller 50a adjusts the illumination range of the lighting apparatus 52 such that the first target illumination area is illuminated, and adjusts the illumination range of the lighting apparatus 204 such that the second target illumination area is illuminated. In the present embodiment, the lighting controller 50a outputs an instruction regarding the first target illumination area to the lighting apparatus 52. Upon receiving the instruction regarding the first target illumination area, the lighting apparatus 52 activates at least one of the optical axis adjusting mechanism 52a and the zoom mechanism 52b to adjust the illumination range such that the illumination range coincides with the first target illumination area or such that the illumination range includes the first target illumination area.

Similarly, the lighting controller 50a outputs an instruction regarding the second target illumination area to the lighting apparatus 204 of the flight object 200. Upon receiving the instruction regarding the second target illumination area, the lighting apparatus 204 activates at least one of the optical axis adjusting mechanism and the zoom mechanism to adjust the illumination range such that the illumination range coincides with the second target illumination area or such that the illumination range includes the second target illumination area. Alternatively, the controller 201 having received the instruction regarding the second target illumination area may cause the flight object 200 to fly such that the illumination area of the lighting apparatus 204 coincides with the second target illumination area or such that the illumination area includes the second target illumination area. With this arrangement, the flight object 200 may illuminate areas around the worker WK4 with the lighting apparatus 204 while flying over the worker WK4, for example. Since light is shone from a relatively high position, the worker WK4 is not likely to feel too much glare, compared with a balloon light.

With the above arrangement, the asphalt finisher 100 is provided with the controller 50 to adjust at least one of the illumination rages of the lighting apparatus 52 and the lighting apparatus 204, thereby more properly illuminating areas around workers.

Further, the asphalt finisher 100 is configured to utilize the power of the power supply 60 mounted on the tractor 1 to illuminate areas around workers. Because of this, workers are not forced to prepare a lighting apparatus equipped with a generator such as a balloon light, and, yet, areas around the workers can properly be illuminated when lighting is needed in an emergency situation such as when the work time extends past sunset. Further, the areas around the workers can properly be illuminated without relying on a lighting apparatus mounted on separate road machinery such as a road roller which is operated around the asphalt finisher 100. As a result, the efficiency of paving work is improved.

The preferred embodiments of the present invention have heretofore been described. However, the present invention is not limited to these embodiments. Various modifications, alterations, and the like may be made to the above-noted embodiments without departing from the scope of the present invention as defined by the appended claims.

The present application claims priority to Japanese Patent Application No. 2017-132032 filed on July 5, 2017.

### [Description of Reference Symbols]

- 1 ...: tractor
- 1G ...: guide rail
- 2 ...: hopper
- 3 ...: screed
- 3A ...: leveling arm
- 5 ...: rear wheel
- 6 ...: front wheel
- 30 ...: front screed
- 31 ...: rear screed
- 43 ...: moldboard
- 50 ...: controller
- 50a ...: lighting controller
- 51 ...: object detecting apparatus
- 52 ...: lighting apparatus
- 52a ...: optical axis adjusting mechanism
- 52b ...: zoom mechanism
- 53 ...: information acquiring apparatus
- 54 ...: generator
- 55 ...: engine
- 57 ...: communication apparatus
- 60 ...: power supply
- 61 ...: engine
- 62 ...: generator
- 100 ...: asphalt finisher
- 150 ...: transmitter
- 151 ...: controller
- 152 ...: transmission apparatus
- 153 ...: battery
- 200 ...: flight object
- 201 ...: controller
- 202 ...: communication apparatus
- 203 ...: autonomous flight apparatus
- 204 ...: lighting apparatus
- 205 ...: battery
- AP ...: existing pavement
- CV ...: conveyor
- NP ...: new pavement
- PV ...: pavement material
- RB ...: roadbed
- SC ...: screw

## Claims

1. An asphalt finisher (100), comprising:
a tractor (1);
a hopper (2) disposed in front of the tractor (1) and configured to accept a pavement material (PV);
a conveyor (CV) configured to supply the pavement material (PV) in the hopper (2) to a rear side of the tractor (1);
a screw (SC) configured to lay and spread the pavement material (PV) supplied by the conveyor (CV) at the rear side of the tractor (1);
a screed (3) configured to flatten the pavement material (PV) laid and spread by the screw (SC) at a rear side of the screw (SC);
a controller (50) configured to adjust an illumination range of a lighting apparatus (52, 204) that illuminates areas behind the asphalt finisher (100); and
an object detecting apparatus (51) configured to detect a worker behind the screed,
wherein the controller (50) is configured to adjust the illumination range of the lighting apparatus (52, 204) based on a detection result of the object detecting apparatus (51) such that an area around the detected worker is illuminated.

2. The asphalt finisher (100) as claimed in claim 1, comprising a transmission apparatus (152) configured to transmit a signal to a flight object (200) having the lighting apparatus (204) mounted thereon,
wherein the controller (50) transmits information about an illumination range of the lighting apparatus (204) to the flight object (200) through the transmission apparatus (152).

3. The asphalt finisher (100) as claimed in claim 1, configured to supply power to a flight object (200) having the lighting apparatus (204) mounted thereon.

4. The asphalt finisher (100) as claimed in claim 1, wherein the lighting apparatus (52) is mounted on the tractor (1).

## Patentansprüche

1. Asphaltfertiger (100), umfassend:
einen Traktor (1);
einen Trichter (2), der vor dem Traktor (1) angeordnet und konfiguriert ist, ein Straßendeckmaterial (PV) aufzunehmen;
einen Förderer (CV), der konfiguriert ist, das Straßendeckmaterial (PV) in dem Trichter (2) einer Rückseite des Traktors (1) zuzuführen;
eine Schnecke (SC), die konfiguriert ist, das von dem Förderer (CV) zugeführte Straßendeckmaterial (PV) an der Rückseite des Traktors (1) zu legen und zu verteilen;
eine Bohle (3), die konfiguriert ist, das von der Schnecke (SC) gelegte und verteilte Straßendeckmaterial (PV) an einer Rückseite der Schnecke (SC) zu glätten;
eine Steuerung (50), die konfiguriert ist, einen Beleuchtungsbereich einer Beleuchtungsvorrichtung (52, 204) einzustellen, die Bereiche hinter dem Asphaltfertiger (100) beleuchtet; und
eine Objektdetektionsvorrichtung (51), die konfiguriert ist, einen Arbeiter hinter der Bohle zu detektieren,
wobei die Steuerung (50) konfiguriert ist, den Beleuchtungsbereich der Beleuchtungsvorrichtung (52, 204) basierend auf einem Detektionsergebnis der Objektdetektionsvorrichtung (51) so einzustellen, dass ein Bereich um den detektierten Arbeiter herum beleuchtet wird.

2. Asphaltfertiger (100) nach Anspruch 1, umfassend eine Übertragungsvorrichtung (152), die konfiguriert ist, ein Signal an ein Flugobjekt (200) zu übertragen, an dem die Beleuchtungsvorrichtung (204) angebracht ist,
wobei die Steuerung (50) über die Übertragungsvorrichtung (152) Informationen über einen Beleuchtungsbereich der Beleuchtungsvorrichtung (204) an das Flugobjekt (200) überträgt.

3. Asphaltfertiger (100) nach Anspruch 1, der konfiguriert ist, ein Flugobjekt (200), an dem die Beleuchtungsvorrichtung (204) angebracht ist, mit Energie zu versorgen.

4. Asphaltfertiger (100) nach Anspruch 1, wobei die Beleuchtungsvorrichtung (52) an dem Traktor (1) angebracht ist.

## Revendications

1. Un finisseur d'asphalte (100), comprenant :
un tracteur (1) ;
une trémie (2) disposée sur le devant du tracteur (1) et configurée pour accepter un matériau de chaussée (PV) ;
un convoyeur (CV) configuré pour fournir le matériau de chaussée (PV) qui se trouve dans la trémie (2) à une partie arrière du tracteur (1) ;
une vis (SC) configurée pour étaler et répandre le matériau de chaussée (PV) fourni par le convoyeur (CV) au niveau de la partie arrière du tracteur (1) ;
un lissoir (3) configuré pour aplanir le matériau de chaussée (PV) étalé et répandu par la vis (SC) au niveau d'une partie arrière de la vis (SC) ;
un contrôleur (50) configuré pour ajuster une plage d'illumination d'un appareil d'éclairage (52, 204) qui illumine les zones qui se trouvent derrière le finisseur d'asphalte (100) ; et
un appareil de détection d'objets (51) configuré pour détecter une personne derrière le lissoir,
dans lequel le contrôleur (50) est configuré pour ajuster la plage d'illumination de l'appareil d'éclairage (52, 204) sur la base d'un résultat de détection de l'appareil de détection d'objets (51) de sorte qu'une zone qui se trouve autour de la personne détectée soit illuminée.

2. Le finisseur d'asphalte (100) selon la revendication 1, comprenant un appareil de transmission (152) configuré pour transmettre un signal à un objet volant (200) ayant l'appareil d'éclairage (204) monté dessus,
dans lequel le contrôleur (50) transmet des informations sur une plage d'illumination de l'appareil d'éclairage (204) à l'objet volant (200) par le biais de l'appareil de transmission (152).

3. Le finisseur d'asphalte (100) selon la revendication 1, configuré pour fournir de l'énergie à un objet volant (200) ayant l'appareil d'éclairage (204) monté dessus.

4. Le finisseur d'asphalte (100) selon la revendication 1, dans lequel l'appareil d'éclairage (52) est monté sur le tracteur (1).
